# EUROPEAN PATENT SPECIFICATION

(11) **EP 1 434 174 B1**
(45) Date of publication and mention of the grant of the patent: **31.10.2012**
(21) Application number: 02770212.5
(22) Date of filing: 25.09.2002
(51) Int. Cl.: G06T 15/00, G06T 15/20, G06T 19/00

(54) **IMAGE CREATION APPARATUS AND METHOD, AND COMPUTER PROGRAM**
BILDERZEUGUNGSVORRICHTUNG UND VERFAHREN UND COMPUTERPROGRAMM
APPAREIL ET PROCEDE DE CREATION D'IMAGES, ET PROGRAMME INFORMATIQUE ASSOCIE

(30) Priority: 26.09.2001 JP 2001295142
(43) Date of publication of application: 30.06.2004
(73) Proprietor: Pioneer Corporation, Kanagawa 212-0031 (JP)
(72) Inventor: MATSUMOTO, Reiji c/o PIONEER CORPORATION, Tsurugashima-shi, Saitama 350-2288 (JP); ADACHI, Hajime c/o PIONEER CORPORATION, Tsurugashima-shi, Saitama 350-2288 (JP)
(74) Representative: Haley, Stephen
(86) International application number: PCT/JP2002/009843
(87) International publication number: WO 2003/027963

(56) References cited:
- EP-A- 1 435 591
- EP-A- 1 437 689
- JP-A- 9 292 830
- JP-A- 9 292 830
- JP-A- 10 021 420
- JP-A- 10 021 420
- JP-A- 11 174 952
- JP-A- 11 232 484
- JP-A- 2000 293 705

## Description

### Technical Field

The present invention relates to an image generating apparatus for and method of generating a three-dimensional (3D) image on the basis of three-dimensional coordinate information, an electronic equipment such as a navigation system incorporating such an image generating apparatus, and a computer program.

### Background Art

Recently, there is remarkable R&D (research and development) about an electronic control for controlling a motion of a car as well as remarkable popularization of navigation systems to assist a car driving. The navigation system has a basic configuration, including various databases, for displaying map information, current position information, various guidance information and the like on a display unit. Furthermore, it is typically for the navigation system to search a drive route on the basis of an entered condition. It is further designed so as to display the searched drive route and a current position based on a GPS (Global Positioning System) measurement or a self-contained measurement on a map and carry out guidance (navigation) to a destination.

Incidentally, in order to generate the display image as aforementioned, a two-dimensional (2D) graphics library in that the drawing device processes a directly executable display list includes routine groups for generating the display list of a plane figure (so-called "2D image") directly executable by the drawing device, and a routine for executing the display list in a batch processing, resulting in the maximum utilization of the drawing device and thereby higher speed in the drawing processing.

On the other hand, there is OpenGL which is API (Application Programming Interface) of Silicon Graphics Inc., as a graphics library for processing the display list corresponding to the image in perspective (so-called "3D image") such as landscape out of the vehicle, which is obtained in a technique of causing a stereoscopic visual effect on the plane on the basis of the driver's view line to be displayed for a guidance purpose in the aforementioned navigation system. The OpenGL has a function for making a display list from the coordinate transformation parameter and therefore is required to be transformed in the CPU so that the drawing device can process it, if the drawing device does not have the function.

Incidentally, the API is an interface rule or standard between an OS and an application running thereon. On the other hand, the OpenGL is a 2D and 3D graphics library, independent of a platform.

Nevertheless, the aforementioned 2D graphics library can process only the 2D graphics library. Therefore, in the case that a 3D graphics display is required, the OpenGL is required to be subjected to the coordinate transformation in the CPU, causing the reduction in the processing speed of the drawing.

Furthermore, it is impossible for the OpenGL to perform a hidden surface removal in Z buffer algorithm, which is a technique for storing a part of images positioned at the foremost drawing position from among multiple frame images composing a frame of 3D image (e.g. image of road, image of a building, image of a building, image of another building, image of sky, which are components for generating a frame of image to indicate a piece of landscape), in the buffer, and then generating a frame of 3D image made of the most frontward image of all drawing positions.

On the other hand, the aforementioned OpenGL has a function for making a display list about the coordinate transformation, and therefore is required to be subjected to the coordinate transformation in the CPU, in the case that the drawing device without a full function of the coordinate transformation is employed, causing the reduction in the processing speed of the drawing.

The present invention has been accomplished in view of the above problems and aims to provide an image generating apparatus and method in which a generation/execution of the display list or a drawing command used for the conventional 2D images graphics library is maintained in its compatibility, that is, capable of executing a drawing application generated for the conventional 2D graphics library in the same manner as the conventional method, and further capable of executing a 3D function at higher speed in the same manner, and to provide a computer program.

The image generating apparatus according to the present invention in order to solve the above problems is embodied in an image generating apparatus having a drawing device which can generate a three-dimensional image, and a drawing application processor and a graphics library that allow said drawing device to generate the three-dimensional image, characterized in that
said drawing application processor comprises (i) a drawing object information generating device which is adapted to generate drawing object information to generate an image for each object included in a three-dimensional image to be generated in a plurality of single coordinate systems each of which corresponds to respective one of predetermined information units each of which is a unit for said drawing device to generate the three-dimensional image, on the basis of three-dimensional coordinate information of an object included in a three-dimensional image to be generated, and (ii) a coordinate transformation information generating device which is adapted to generate coordinate transformation information to define at least a visual point and a visual range when the three-dimensional image is to be generated and for designating an identifier with respect to the generated coordinate transformation information,
said graphics library comprises (i) a drawing object information storing device which is adapted to store the generated drawing object information; and (ii) a coordinate transformation information storing device which is adapted to store the generated coordinate transformation information in association with the designated identifier, and
said drawing device is adapted to generate the three-dimensional image by incorporating the stored coordinate transformation information that is specified by the identifier for an image generation with the stored drawing object information, for said each predetermined information unit.

According to the image generating apparatus of the present invention, the image generating apparatus provided with the drawing application processor and the graphics library generates, stores and manages data, which is divided into the coordinate transformation information and the drawing object information, each of which is generated by their respective information generating devices, in order to generate an image. On the basis of these stored and managed data, the drawing device generates a 3D image as a display image and outputs it to a display unit. Thus, by processing the coordinate transformation information and the drawing object information separately and independently and executing the drawing object information in a batch processing, the processing speed of the drawing device is improved. Particularly, the coordinate transformation information generating device designates an identifier relative to the generated coordinate transformation information, and the coordinate transformation information stored in the graphics library and used for the drawing device is managed with the identifier. Thereby, it is possible to designate the information about the view point to be used and the view range to be used, independently of the drawing object information and the list thereof (i.e. the display list), only by adding the identifier of the coordinate transformation information to the parameter or parameters for the drawing execution.

As a result, this management of the coordinate transformation information with the identifier facilitates an expansion to the 3D image graphics library, while maintaining an execution form of the display list used for the conventional 2D image graphics library. Furthermore, the management of the coordinate transformation information with the identifier facilitates the management of a plurality of scenes or the access management under multi-thread environment. Furthermore, it is possible to incorporate the coordinate transformation setting to the drawing device as a part of a series of display list execution, avoiding a concern about an exclusive control of the drawing device in the drawing application program.

Additionally, this separate and independent processing or handling of the coordinate transformation information and the drawing object information brings versatility on the drawing device used therefor and improves its ability of replacement.

Incidentally, specifically in the present invention, with regard to an expression "generating drawing object information in a single coordinate system for each predetermined information unit" about the drawing object information generating device, the "predetermined information unit" herein means a unit of display list for example, and corresponds to a unit of the coordinate transformation information to be incorporated with the drawing object information when the drawing device generates a 3D image. Further, although the coordinate system is unified in the same predetermined information unit such as the same playlist, the coordinate system is not necessarily unified among different predetermined information units.

In an aspect of the image generating apparatus of the present invention, a plurality of coordinate transformation information generated by the coordinate transformation information generating device are stored into the coordinate transformation information storing device, in association with the identifier, a plurality of drawing object information generated by said drawing object information generating device are stored into the drawing object information storing device, and the drawing device generates the three-dimensional image from a desired combination of the coordinate transformation information and the drawing object information, by specifying the coordinate transformation information by the identifier for the image generation.

According to this aspect, the desired combination from among some coordinate transformation information and some drawing object information, all of which are stored in association with the identifier, can be selected to generate an image in the drawing device, to promptly display the image or to display various image along the user's request.

In another aspect of the image generating apparatus of the present invention, a list preparation program for preparing a list of the drawing object information; a set up program for setting up the coordinate transformation information and for designating the identifier; and an execution instruction program for instructing an execution of a drawing in the drawing device are executed.

According to this aspect, providing the list preparation program for preparing a so-called "display list" and the program for setting up the coordinate transformation information and for designating the identifier enables not only to handle the drawing object information and the coordinate transformation information independently of each other, each of which is supplied to the graphics library to be connected to the later stage, with an execution command, but also to manage the coordinate transformation information with the identifier. Thereby, altering the coordinate transformation information while maintaining the drawing object information facilitates to generate the 3D image of the same drawing object with different coordinates.

In another aspect of the image generating apparatus of the present invention, the graphics library includes: a function for managing the coordinate transformation information with the identifier; a function for managing the drawing object information; and a function for controlling the drawing device.

According to this aspect, owing to the function for managing the coordinate transformation information with the identifier, the function for managing the drawing object information, and the function for controlling the drawing device, all of which are provided to the graphics library, a 3D image that the drawing device actually generates is controlled.

In another aspect of the image generating apparatus of the present invention, the drawing application processor includes a function in which map information including the three-dimensional coordinate information is supplied from a map database incorporated within a navigation system.

According to this aspect, on the basis of the map information from the map database, and further on the basis of a current position information from a GPS positioning apparatus or the like incorporated within the navigation system and/or route information inputted by the driver, a 3D image based on the map information including the three-dimensional coordinate information, which is subjected to a predetermined coordinate transformation, is displayed on the display. Moreover, for the convenience of the driver, guidance information without the coordinate transformation may be superimposed onto the 3D image and then displayed.

In another aspect of the image generating apparatus of the present invention, the drawing device generates an image in perspective as the three-dimensional image.

According to this aspect, a scene such as a sight of the driver who sits and drives at the driver's seat is displayed as the 3D image in perspective, and thereby the driver can easily recognize the 3D image, in association with a real scene.

In another aspect of the image generating apparatus of the present invention, the coordinate transformation information includes information to define a light source, in addition to the information to define the visual point and the visual range.

According to this aspect, the drawing object can be transformed on the basis of the light source information in addition to the visual point information and the visual range information as the coordinate transformation information, to be displayed as more real image. On the other hand, if the drawing device is replaced, the coordinate transformation information such as the visual point information, visual range information, light source information and the like is applicable as it is and thereby the real image is ensured while the ability of replacement is maintained.

In another aspect of the image generating apparatus of the present invention, the visual point is set on the basis of a visual point of a driver of a vehicle.

According to this aspect, a scene as a sight on the visual line of the driver is displayed as the 3D image, and thereby the driver can easily recognize the image as the image in perspective linked with the real scene. The visual point may be set up manually.

In another aspect of the image generating apparatus of the present invention, the visual range is set on the basis of a visual range of a driver of a vehicle.

According to this aspect, a scene within the visual range of the driver is displayed as the 3D image. The visual range may be set up manually.

In another aspect of the image generating apparatus of the present invention, the drawing device generates a three-dimensional image by superimposing a plurality of partial frame images that are generated on the basis of the plurality of drawing object information generated and stored for each object.

According to this aspect, the 3D image that is generated by superimposing the plurality of partial frame images that are generated in accordance with each drawing object information is finally obtained and thereby a 3D image with more reality can be generated relatively quickly by the drawing device.

In this aspect, a frame buffer for temporarily storing the plurality of partial frame images may be further provided.

Owing to this arrangement, since the plurality of partial frame images are temporarily stored in the frame buffer, which may be disposed within a buffer memory managed by the drawing device, a 3D image can be generated relatively easily by superimposing them.

In another aspect of the image generating apparatus of the present invention, the drawing application processor re-generates the coordinate transformation information and re-designates the identifier, with the aid of the coordinate transformation information generating device, while the drawing object information is maintained for an object commonly included in two three-dimensional images in series, which differ sequentially from each other with the course of time.

According to this aspect, in the case that a 3D image that changes sequentially with the course of time is to be drawn, the coordinate transformation information is changed with the designation of the identifier while the drawing object information is maintained, and thereby a process workload for the drawing can be reduced and the 3D image that changes sequentially can be generated quickly. For instance, a series of images in which shade of an object changes with the course of time is obtained by sequentially changing the light source, while a series of images of drawing object that changes sequentially as the vehicle moves is obtained by sequentially changing the visual point on the basis of the same drawing object information.

In another aspect of the image generating apparatus of the present invention, the drawing application processor and the graphics library generate and store the drawing object information and the coordinate transformation information for the plurality of three-dimensional images in a multitask operation.

According to this aspect, since the coordinate transformation information and the drawing object information are generated and stored separately and independently in the multitask operation, it is feasible to generate the 3D image even faster as a whole.

The image generating apparatus is further provided with the drawing device internally or externally, in addition to the drawing application processor and the graphics library. Therefore, an environment capable of displaying the 3D image is obtained relatively easily, if a display unit such as a monitor is connected to the image generating apparatus.

An electronic equipment according to the present invention in order to solve the above problems is provided with the aforementioned image generating apparatus (including various aspects thereof); an information source from which the three-dimensional information is supplied to the drawing application processor; and a display device for visually outputting the three-dimensional image that is generated by the drawing device.

According to the electronic equipment of the present invention, since the image generating apparatus of the present invention is employed, various electronic equipments can be implemented, including a navigation system such as on-vehicle navigation system capable of quickly displaying the 3D image, a game machine such as an arcade game, a TV game or the like, otherwise a computer such as a personal computer capable of displaying the 3D image.

According to the present invention, there is provided a computer program characterized in that said computer program makes a computer function as an image generating apparatus having a drawing device which can generate a three-dimensional image, and a drawing application processor and a graphics library that allow said drawing device to generate the three-dimensional image, wherein
said drawing application processor comprises (i) a drawing object information generating device which is adapted to generate drawing object information to generate an image for each object included in a three-dimensional image to be generated in a plurality of single coordinate systems each of which corresponds to respective one of predetermined information units each of which is a unit for said drawing device to generate the three-dimensional image, on the basis of three-dimensional coordinate information of an object included in a three-dimensional image to be generated, and (ii) a coordinate transformation information generating device which is adapted to generate coordinate transformation information to define at least a visual point and a visual range when the three-dimensional image is to be generated and for designating an identifier with respect to the generated coordinate transformation information,
said graphics library comprises (i) a drawing object information storing device which is adapted to store the generated drawing object information; and (ii) a coordinate transformation information storing device which is adapted to store the generated coordinate transformation information in association with the designated identifier, and
said drawing device is adapted to generate the three-dimensional image by incorporating the stored coordinate transformation information that is specified by the identifier for an image generation with the stored drawing object information, for said each predetermined information unit.

According to the computer program as the present invention, an integrated control for the image generating apparatus according to the present invention can be achieved relatively easily, by loading the computer program from a record medium such as a CD-ROM (Compact Disc Read Only Memory), a DVD-ROM (DVD Read Only Memory), a hard disk or the like, which stores the computer program, into the computer and executing the program, otherwise by downloading the computer program into the computer via a communication device and executing the program.

According to the present invention, there is further provided an image generating method with an image generating apparatus having a drawing device which can generate a three-dimensional image, and a drawing application processor and a graphics library that allow said drawing device to generate the three-dimensional image, characterized in that said image generating method comprising:
a drawing object information generating process in which said drawing application processor generates drawing object information to generate an image for each object included in a three-dimensional image to be generated in a plurality of single coordinate systems each of which corresponds to respective one of predetermined information units each of which is a unit for said drawing device to generate the three-dimensional image, on the basis of the three-dimensional coordinate information of an object included in a three-dimensional image to be generated,
a coordinate transformation information generating process in which said drawing application processor generates coordinate transformation information to define at least a visual point and a visual range when the three-dimensional image is to be generated and of designating an identifier with respect to the generated coordinate transformation information,
a drawing object information storing process in which said graphics library stores the generated drawing object information,
a coordinate transformation information storing process in which said graphics library stores the generated coordinate transformation information in association with the designated identifier, and
a process in which said drawing device generates the three-dimensional image by incorporating the stored coordinate transformation information that is specified by the identifier for an image generation with the stored drawing object information, for said each predetermined information unit.

According to the image generating method of the present invention, similarly to the case of the image generating apparatus according to the present invention mentioned above, the identifier is designated for the generated coordinate transformation information, and thereby the coordinate transformation information that is stored in the graphics library and used in the drawing device is managed with the identifier. Thereby, in the drawing processing, the appropriate view point or view range information can be designated, only by adding the identifier of the coordinate transformation information to the parameter or parameters, that is, the drawing device can be easily expanded into a 3D image graphics library, while the execute form of the display list used for the conventional 2D image graphics library is maintained. Moreover, the management of the coordinate transformation information with the identifier facilitates the management of the plurality of scenes or the access management under the multi-thread environment. Furthermore, the coordinate transformation information setting for the drawing device may be a part of the series of processing of the display list, avoiding the concern about the exclusive control of the drawing device with the drawing application program. Additionally, the independent processing or handling of the coordinate transformation information and the drawing device information brings the versatility for various drawing device that may be used, and improves the ability of replacement.

Furthermore, in an aspect of the image generating method according to the present invention, the drawing application processor executes: a list preparation process of preparing a list of the drawing object information; a set up process of setting up the coordinate transformation information and of designating the identifier; and an execution instruction process of instructing an execution of a drawing in the drawing device.

According to this aspect, owing to a list preparing program for preparing a so-called "display list", and a program for designating the identifier to set up the coordinate transformation information, (i) the drawing object information and the coordinate transformation information are separately processed or handled, and (ii) the coordinate transformation information is managed with the identifier, so that a 3D image of the same drawing object can be readily obtained with different coordinates, only by altering the identifier for managing the coordinate transformation information, while the drawing object information is maintained.

Furthermore in another aspect of the image generating method according to the present invention, the graphics library executes: a process of managing the coordinate transformation information with the identifier; a process of managing the drawing object information; and a process of controlling the drawing device.

According to this aspect, owing to the process of managing, with the identifier, the coordinate transformation information included in the graphics library; the process of managing the drawing object information; and the process of controlling the drawing device, the 3D image to be actually generated by the drawing device is controlled.

As mentioned above, according to the present invention, the coordinate transformation information, which is stored in the graphics library and used in the drawing device, is managed with the identifier. Thereby, in the drawing processing, independently of the drawing object, the appropriate view point or view range information can be designated with the identifier. Therefore, while the execute form of the display list used for the conventional 2D image graphics library is maintained, it is possible to readily expand into the 3D image graphics library. Moreover, the management of the plurality of scenes or the access management under the multi-thread environment is facilitated, and thereby the concern about the exclusive control of the drawing device in the drawing application program is avoided.

Additionally, the independent processing or handling of the coordinate transformation information and the drawing object information brings the versatility of the drawing device used for the system, and improves the ability of replacement.

The above and other advantages and effect of the present invention will be more apparent in the following embodiments of the invention.

### Brief Description of The Drawings

FIG. 1 is a block diagram illustrating a fundamental configuration of an image generating apparatus as a first embodiment of the present invention.
FIG. 2 is a view of illustrating an internal structure of a graphics library and ability of replacement of a drawing application, in the image generating apparatus.
FIG. 3 is a view of illustrating management of a scene object with an identifier, in the image generating apparatus.
FIG. 4 is a flow chart showing a process flow of the graphics library.
FIG. 5 is a flow chart showing a process flow of the drawing device in the image generating apparatus.
FIG. 6 is a sequential chart showing an operation of the image generating apparatus.
FIG. 7 is an example of generated image.
FIG. 8 is a view showing a construction of a navigation system applied to the image generating apparatus according to the present invention as a second embodiment.

### The Best Modes to Carry Out The Present Invention

The embodiments according to an image generating apparatus and an image generating method as well as a computer program in the present invention are explained below with reference to the drawings. Incidentally, each of the embodiments described below is dedicated to the image generating apparatus of the present invention that is used for an on-vehicle navigation system. Nevertheless, the present invention may be suitably applied to an image generation using a personal computer, to an image generation for a TV game or to other purposes.

### (First Embodiment)

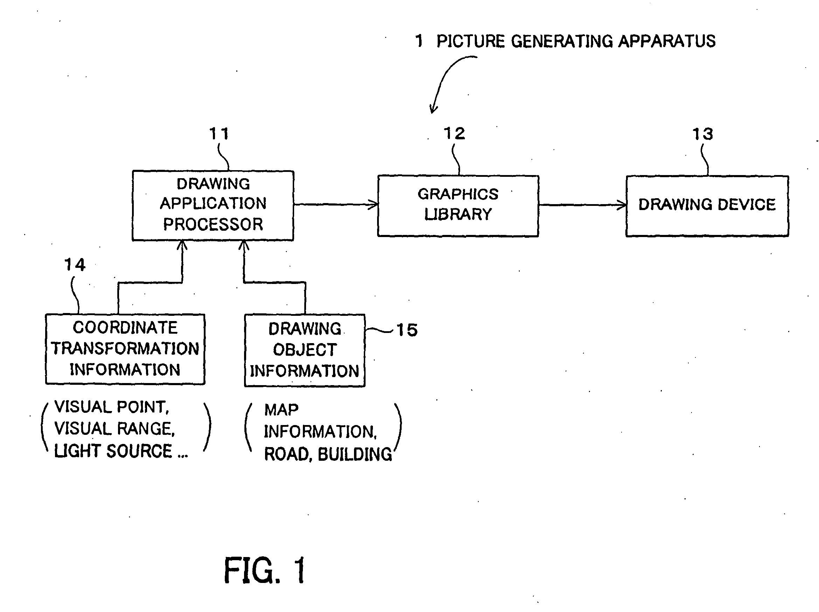

An image generating apparatus in the first embodiment is described below with reference to FIG. 1 to FIG. 7.

Firstly, the fundamental configuration of the image generating apparatus in this embodiment is described with reference to FIG. 1.

In FIG.1, the image generating apparatus 1 is provided with a drawing application processor 11, a graphics library 12 and a drawing device 13, wherein coordinate transformation information 14 such as a visual point, a visual range, a light source or the like and drawing object information 15 such as a road, a building, map information or the like are inputted into the drawing application processor 11. The graphics library 12 and the drawing device 13 constitute together a system as a unit, which may be optionally replaced as the unit relative to the drawing application processor 11, as discussed below in detail. This contributes to improvement in the ability of replacement, which is a distinctive feature of the present invention.

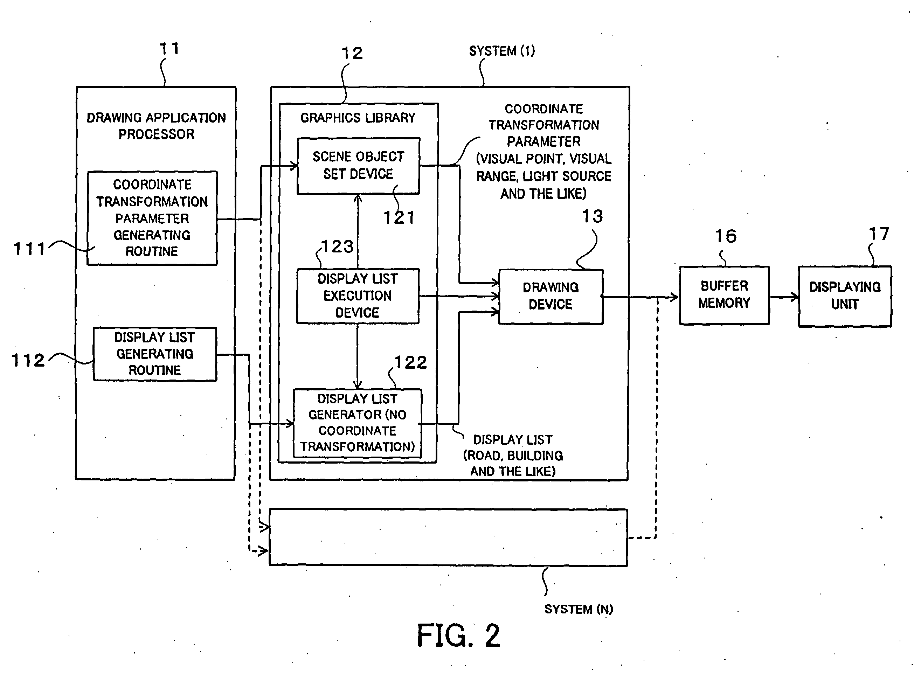

As shown in FIG.2, the drawing application processor 11 has a coordinate transformation parameter generation routine 111 and a display list generation routine 112. The coordinate transformation parameter generation routine 111 generates coordinate transformation data on the basis of the coordinate transformation information such as the visual point, the visual range, the light source or the like, which is inputted as the coordinate transformation information 14. This data is managed as a scene object in the graphics library 12. An operation of setting parameters for the scene object as well as an operation of applying the scene object to the drawing on the basis of the parameters that is already set, is executed relative to an identifier of the scene object.

On the other hand, the display list generation routine 112 generates the drawing object information from the road, the building, the map information or the like, and inputs it into the graphics library 12. This drawing object information does not include the coordinate transformation information. The coordinate transformation information is independently set as the scene object as previously discussed. In this way, the drawing object information and the coordinate transformation information are generated independently of each other, but the former is incorporated into the latter to generate the image, if needed. This allows the above-mentioned replacement of the system and an improvement in the drawing speed.

Next, the graphics library 12 has a scene object set device 121, a display list preparation device 122 and a display list execution device 123.

The scene object set device 121 stores and manages the coordinate transformation information, which is generated through the coordinate transformation parameter generation routine 111 in the drawing application processor 11, into the scene object corresponding to the identifier that is designated by the drawing application. The display list preparation device 122 prepares a display list that is generated through the display list generation routine 112 in the drawing application processor 11, so as to be directly and collectively (in a batch processing) executed for the higher speed drawing by the drawing device 13.

On the other hand, the display list execution device 123 controls the drawing device 13, while making the scene object set device 121 and the display list preparation device 122 send the display list and the coordinate transformation parameters, both of which are processed so as to allow the batch processing of the coordinate transformation information and the drawing object information, into the drawing device 13 to execute the drawing operation.

In this graphics library 12, the coordinate transformation information and the drawing object information are separately stored, and when the image is to be generated, in the drawing device 13, the coordinate transformation information are incorporated into the drawing object information for the coordinate transformation and the image generation by adding conditions such as the visual point, the visual range, the light source or the like, which are set as the scene objects. Therefore, the drawing object information stored in a single list is formed as display list on the basis of a single coordinate system that does not depend on the visual point or the visual range.

Particularly in this embodiment, the coordinate transformation parameter generation routine 111 designates the identifier with respect to the generated coordinate transformation parameter. In response to this, the scene object is stored into the scene object setting device 121 in association with the identifier, with which the scene object used to perform the drawing processing in the drawing device 13 is managed. Thereby, with regard to the execution of the drawing processing as mentioned below, the appropriate view point or view range information can be designated, independently of the display list generated by the display list preparation device 122, only by adding the identifier to the parameter or parameters. As a result, it is possible to readily expand into the 3D image graphics library 12, while the execute form of the display list used for the conventional 2D graphics library is maintained.

The image that is generated at the drawing device 13 is once stored in a buffer memory 16, then inputted into the display device 17 and displayed.

Here, according to the method of the present invention, i.e. generating and managing the coordinate transformation information and the drawing object information separately, the system (1) including the graphics library 12 and the drawing device 13 can be constructed independently of the drawing application processor 11. Therefore, the system (1) can be replaced by another system (N) including the graphics library 12 and the drawing device 13, resulting in drastic improvement of convenience based on a wide range of options in the apparatus design, the making, the manufacturing, the maintenance or the like.

Moreover, multiple scene objects having different identifiers may be stored or multiple display lists for different drawing object informations may be stored. Generating the image by combining the multiple scene objects and the multiple display lists in response to the situation has an effect of generating different images having different coordinate systems at high speed. For instance, in the case that multiple images that changes continuously or sequentially is to be generated, only the coordinate transformation information is changed (i.e. only the visual point and field, or only the light source is changed), while the display list relating to the drawing object commonly contained in these images is maintained, and thereby a 3D images that changes continuously or sequentially can be relatively readily generated.

Additionally, in FIG. 2, only a single buffer memory 16 is shown for the sake of convenience, but multiple buffer memories may be provided, which are for temporarily storing multiple partial frame images depicted respectively on the basis of multiple drawing object informations that are generated and stored for each object, and one 3D image obtained by superimposing these multiple images may be outputted from the drawing device 13. Furthermore, this superimposing can be made at the drawing device 13, while a Z-buffer is used to remove the hidden part from among the multiple images that are superimposed as mentioned above.

More particularly, handling multiple scene objects and multiple display lists simultaneously in the drawing application processor 11 and the graphics library 12 is advantageous to improve in the processing speed of the multi task drawing.

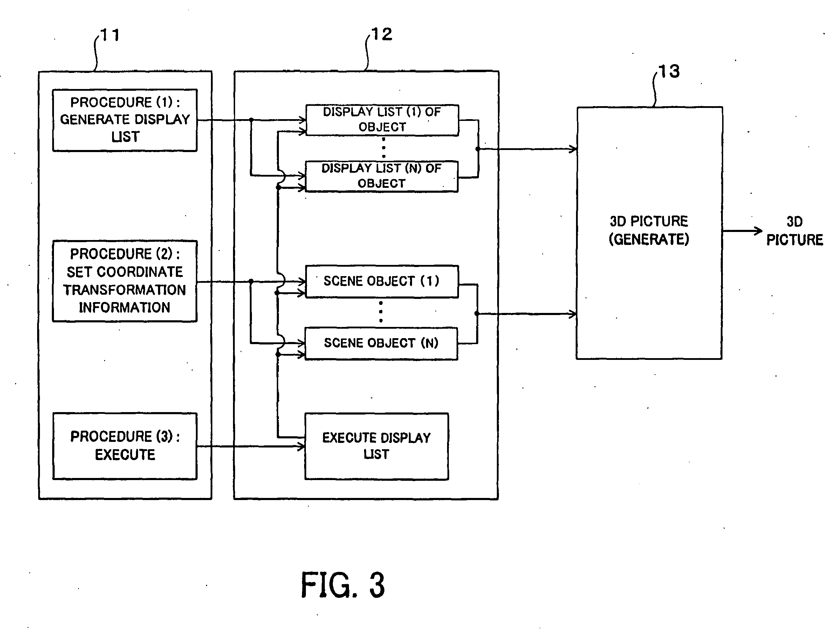

Next, referring to FIG. 3, the procedure for generating the 3D image is described below. Firstly, at the drawing application processor 11, a display list is generated (Procedure #1). The generated display list is stored as an object display list #1 in the graphics library 12. Next, coordinate transformation information is set (Procedure #2). The coordinate transformation information is stored in a scene object #1. Next, a command or instruction to generate the image is provided (Procedure #3). The object display list #1 and the scene object #1 in the graphics library 12 are accessed to input each data into the drawing device 13 to generate the image.

The drawing device 13 has the 3D coordinate transformation function, and thereby generates and displays the drawing object information in three dimension, such as a 3D scene ahead of the driver during the driving, on the basis of the coordinate transformation parameters that is designated by the identifiers, for example on the basis of the driver's view (visual point and visual range), the light source or the like if the vehicle is running. Relating to this, multiple display lists and multiple scene objects may be generated and stored in advance so as to generate the image from the combination of them as appropriate.

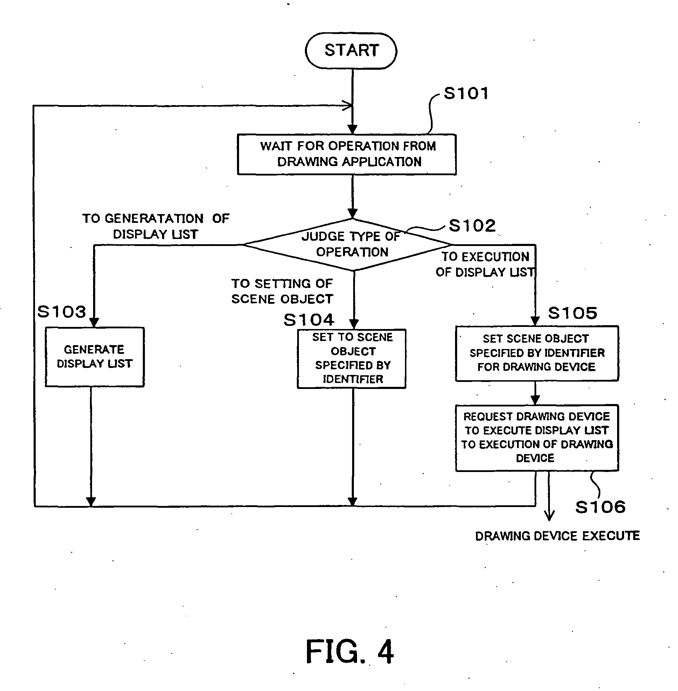

Next, the operational flow of the graphics library 12 is described below with reference to FIG.4.

Firstly, if there is an operation input in a waiting state that is waiting for the operation input from the drawing application processor 11 (Step S101), a type of the operation is judged (Step S102). The type of the operation in the graphics library 12 may be the display list preparation, the scene object setting or the display list execution.

If a command or instruction for the display list preparation is provided, the display list is generated on the basis of the drawing object information such as roads, buildings and the like (Step S103). Once the display list is generated, the process goes back to the step S101 and waits for the next operation input.

As a result of the judgement at the step S102, if the operation input is for the scene object setting, the scene object that is designated by the identifier of the coordinate transformation information, such as the driver's view (visual point and visual range), the light source or the like, is set (step S104). Once the scene object setting is completed, the process goes back to the step S101 again, and waits for the next operation input.

As a result of the judgement at the step S102, if the operation input is for the display list execution, the scene object that is designated by the identifier is set for the drawing device 13 (step S105), and a request for the display list execution is sent to the drawing device 13 (step S106).

After that, the process goes back to the step S101 and waits for the next operation input. The drawing device 13 executes the display lists in a batch processing to generate the image. The execution procedure is in line with the execution procedures described with reference to FIG. 3.

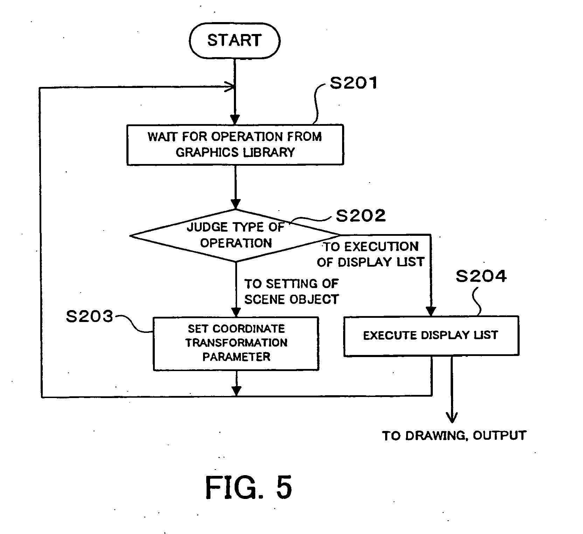

The operational flow of the drawing device 13 is described below with reference to FIG. 5.

Firstly, if there is an operation input in a waiting state that is waiting for the operation input from the graphics library 12 (Step S201), a type of the operation is judged (Step S202). The type of the operation may be the scene object setting and the display list execution.

If the operation input is for the scene object setting, the drawing device 13 sets the coordinate transformation parameters based on the identifiers (Step S203). Once the coordinate transformation parameter setting is completed, the process goes back to the step S201 again and waits for the next operation input.

As a result of the judgement at the step S202, if the operation input is for the display list execution, the image is generated, on the basis of the coordinate transformation parameters and the display list. The generated image is outputted from the drawing device 13.

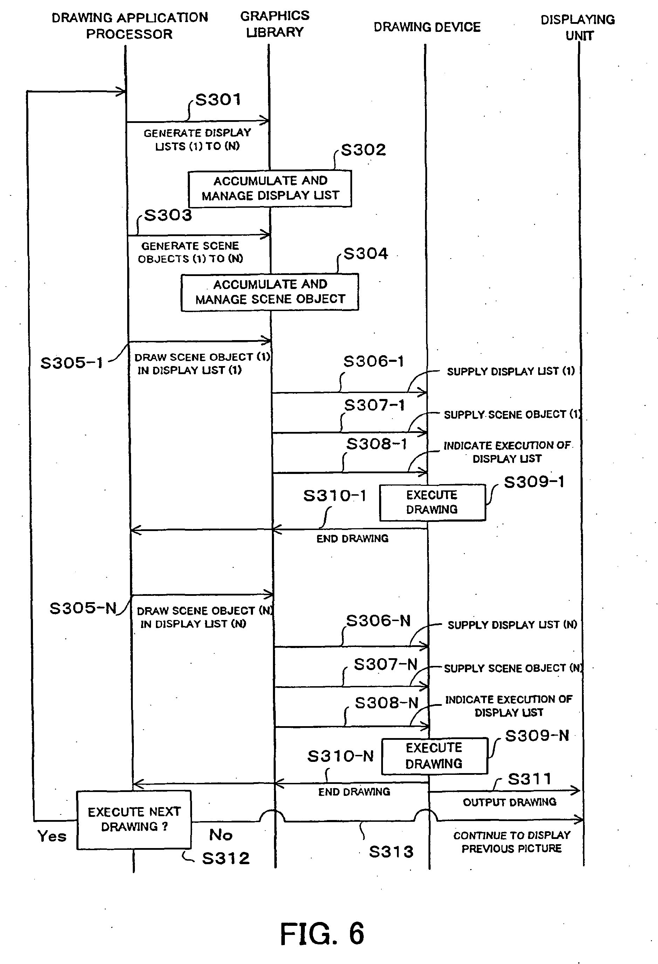

The operation of the image generating apparatus is described below in chronological order with reference to a sequence chart of FIG.6. This sequence chart shows, in chronological order, an inter-relationship among the drawing application processor 11, the graphics library 12, the drawing device 13 and the display unit 17, in which horizontal lines are representative of the inter-relationship, while vertical lines are representative of a lapse of time in a line from the top to the bottom.

Firstly, a display list is generated in the drawing application processor 11 and inputted into the graphics library 12 (Step S301). The display list is adapted to the drawing execution, then stored and managed in the graphics library 12 (Step S302).

Next, the drawing application processor 11 sends a command or instruction to the graphics library 12 in order to set the coordinate transformation parameter to the scene object (step S303). The graphics library 12 sets the scene object on the basis of the command or instruction, and then stores and manages it (step S304).

The display list and the scene object may be generated one by one, or may be generated and stored in a unit, such as display lists #1 to #N, and scene objects #1 to #N, in advance.

Next, the drawing application processor 11 sends the graphics library 12 a command or instruction to generate the image from the combination of the display list #1 and the scene object #1 (Step S305-1). In response to this command or instruction, the graphics library 12 supplies the display list #1 to the drawing device 13 (Step S306-1), and supplies the scene object #1 to the drawing device 13 (Step S307-1). Once the drawing data is supplied, a command or instruction to execute the display list is inputted (Step S308-1). In response to this command or instruction, the drawing device executes the image generation on the basis of the coordinate transformation parameter of the scene object using the display list (step S309-1). Once the drawing execution is completed, the fact of completion is send to the graphics library 12 and the drawing application processor 11 (step S310-1).

Similarly, other images are generated successively from a combination of a display list #i and a scene object #i (wherein i=2,3,4....). Finally, the drawing application processor 11 sends a command or instruction to the graphics library 12 in order to generate the image from a combination of a display list #N and the scene object #N (step S305-N). In response to this command or instruction, the graphics library supplies the display list #N to the drawing device 13 (step S306-N) and supplies the scene object #N to the drawing device 13 (step S307-N). Once the drawing data is supplied, the display list execution is instructed (step S308-N). In response to this instruction, the drawing device executes the drawing on the basis of the coordinate transformation parameter of the scene object using the display list (step S309-N). Once the drawing execution is completed, the fact of the completion is sent to the graphics library 12 and the drawing application processor 11 (step S310-N).

Then, as the drawing process is terminated, the image is outputted on the display unit 17 (step S311).

Receiving a report of the completion of the drawing process, the drawing application processor 11 judges whether or not the next drawing is to be executed (step S312). In the case that the next drawing is to be executed, the process goes back to the step S301, so that a new image is generated by repeating the above-mentioned drawing process. On the other hand, in the case that the next drawing is not to be executed, it may be decided whether the present image is to be left displayed (step S313) or to be deleted, depending on various conditions.

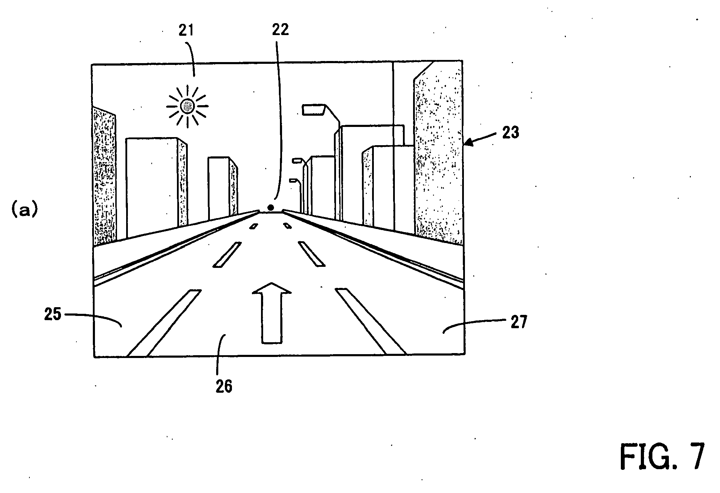

FIG.7 is an example of a display of the 3D image that is generated as mentioned above, showing a scene based on a driver's view from the inside of the vehicle that is running on a road in a town. In the figure, a light source 21, a visual point 22, a visual range 23 or the like is representative of the coordinate transformation information that is designated by the identifier to be incorporated into the scene object, while a building 24a, 24b, 24c...., a road 25 or the like is representative of the drawing object information. The light source 21 may be the sun (during the daytime), or a streetlamp (during the nighttime), whose position or lighting direction constitutes a parameter. On the other hand, the visual point 22 may be a point corresponding to the driver's visual point, allowing the driver to view the scene on the display unit as if it were a real scene around the vehicle. The visual range 23 is for defining a predetermined image range, which is suitably set for the driver.

On the other hand, the buildings 24a, 24b, 24c....., the road 25 or the like is representative of the drawing object information, and the display list relating to the drawing information is adapted so as to be executed directly by the drawing device. Such drawing object information may be the information that is supplied from a map information database or the like belonged to the navigation system. Further, with regard to a format as the drawing object information, it is represented in a form employing only a coordinate system without the coordinate transformation information.

In FIG. 7, on the basis of the information from the scene object, the light source 21 (the sun in this case) is ahead of the driver, while the side of the buildings 24a, 24b, 24c,..... that faces the driver is darkly shaded. On the other hand, the coordinate transformation is executed so that the drawing object such as the building 24a, 24b, 24c,....., the road 25 or the like within a range that is defined by the visual range 23 is converged in perspective on the visual point 22 that is located above the road 25.

As discussed above, since the scene object used to execute the drawing processing in the drawing device 13 is managed with the identifier, it is possible to readily expand into the 3D image graphics library 12, while the execute form of the display list used for the conventional 2D image graphics library is maintained. Moreover, the separate processing or handling of the drawing object information and the coordinate transformation information allows the image drawing with the coordinate transformation at higher speed and facilitates the image drawing of the same object with different coordinates by altering the coordinate transformation information. Furthermore, the separation of the drawing object information and the coordinate transformation information allows the selection and replacement of the drawing device.

### (Second Embodiment)

Next, an embodiment wherein the above-mentioned image generating apparatus is applied to a navigation system for a movable body is discussed below. As discussed below in detail, various function of the navigation system are closely related to the image generating apparatus and therefore incorporated into the same. Incidentally, the configuration and operation of the image generating apparatus in itself are of those mentioned above, for which the explanation is not repeated, but the explanation mentioned above is to be referred as appropriate.

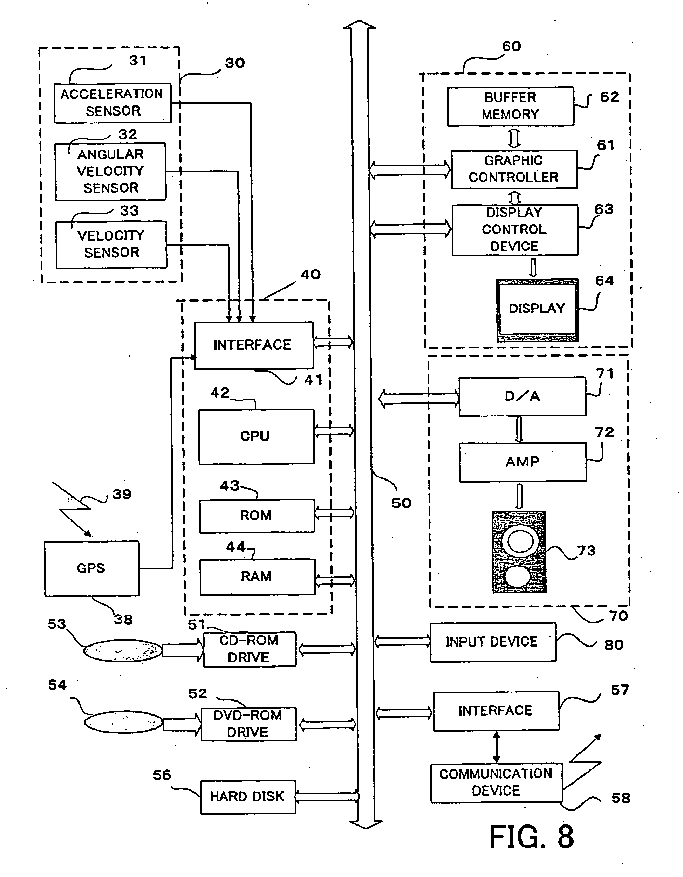

Firstly, the navigation system that is applied to the present embodiment is described in its outline, with reference to FIG. 8.

The navigation system is provided with a self-contained positioning apparatus 30, a GPS receiver 38, a system controller 40, an input/output (I/O) circuit 41, a CD-ROM drive 51, a DVD-ROM drive 52, a hard disk device (HDD) 56, a wireless communication device 58, a display unit 60, an audio output unit 70, an input device 80 and an external interface (I/F) unit 81, all of which are respectively connected to a bus line 50 for transferring control data and process data.

The self-contained positioning apparatus 30 is provided with an acceleration sensor 31, an angular rate sensor 32 and a velocity sensor 33. The acceleration sensor 31, which may be made of a piezoelectric element, outputs an acceleration data that is obtained by detecting an acceleration of a vehicle. The angular rate sensor 32, which may be made of a vibratory gyroscope, outputs an angular rate data and a relative azimuth data of a vehicle that is obtained by detecting the angular rate of the vehicle when a direction of the vehicle is changed. The velocity sensor 33 detects a rotation of a vehicle mechanically, magnetically or optically and outputs a pulse signal having a pulse number that corresponds to a velocity of the vehicle, every time when the rotation of a predetermined angle is detected about a vehicle shaft.

The GPS receiver 38 has a known configuration provided with a plane polarization non-directional reception antenna (heimen-henpa-mushikousei-jushin-antena) and a high frequency reception processor, and further a digital signal processor (DSP) or a micro processor unit (MPU), a V-RAM, a memory and so on. The GPS receiver 38 is arranged to receive electric waves from at least three GPS satellites orbiting around the earth, for a position calculation and a travel velocity azimuth calculation, through a spread spectrum demodulation (supekutoru-gyaku-kakusan), a distance measurement, a Doppler measurement and an orbit data processing, and output the resultant absolute position information of the receive point (a vehicle running point) continuously or consecutively from the I/O circuit 41 into the bus line 50, so that the system controller 40 takes the absolute position information to display on the road map of the screen.

The system controller 40, which is provided with a CPU 42, a ROM 43 (that is a non-volatile solid memory device) and a working RAM 44, exchanges data with each unit or device that is connected to the bus line 50. The processing control through this data exchange is executed by a control program and a boot program that are stored in the ROM 43. The RAM 44 temporarily stores setting information and the like for changing a map display (changing between a whole map display and an area map display) in accordance to the user's operation via the input device 80.

The CD-ROM drive 51 and the DVD-ROM drive 52 read and output each of map database information (e.g. various road information such as the number of lanes, a road width or the like in the map information (map folio)) from the CD-ROM 53 and the DVD-ROM 54 in which the map database information is stored respectively.

The HDD 56 is operative to store the map (image) data that is read at the CD-ROM drive 51 or the DVD-ROM drive 52, and to read it at any time point later than this storing process. Further, the HDD 56 is also operative to store audio data or video data that is read from the CD-ROM drive 51 or the DVD-ROM drive 52. Thereby, for example, audio output or video output is allowed by reading the audio data or video data that is stored in the HDD 56, while the navigation processing is executed by reading the map data from the CD-ROM 53 or the DVD-ROM 54. Alternatively, the navigation processing is allowed by reading the map data that is stored in the HDD 56, while the audio output or video output is executed by reading the audio data or video data from the CD-ROM 53 or the DVD-ROM 54.

The display unit 60 displays various processing data on the screen under control of the system controller 40. With regard to the display unit 60, a graphic controller 61 disposed therein controls each part of the display unit 60, on the basis of the control data that is transferred from the CPU 42 via the bus line 50. Additionally, a buffer memory 62 such as V-RAM temporarily stores image information for a real-time display. Further, a display controller 63 controls the display processing to display the image data, which is outputted from the graphic controller 61, on the display 64. This display 64 may be disposed near a front panel in the vehicle.

With regard to the audio output unit 70, a D/A converter 71 converts the audio signal that is transmitted via the bus line 50 under control of the system controller 40 into the digital signal, while a variable amplifier (AMP) 72 variably amplifies the analog signal that is outputted from the D/A converter 72 to output to a speaker 73, from which the sound is outputted.

The input device 80 is provided with keys, switches, buttons, remote controllers and audio input devices, for inputting various commands or data. The input device 80 is disposed around a display 64 or a front panel of a body of the on-vehicle type electronic equipment that is mounted in the vehicle.

Here, in the case that the image generating apparatus according to the present invention is applied to a navigation system, it is required to appropriately display an image in agreement with a drive route. That is, it is desirable to display an image in three dimensions that is seen from the driver who is driving the vehicle on the road. Moreover, it is useful for the safety to inform the driver an image around a coming corner or a sight ahead of an unclear passage, with displaying such an image in three dimensions. Furthermore, it is required to display various superimposed messages on each image.

Therefore, the image generating apparatus according to the present invention can provide a remarkably effective navigation system by forming an integral system incorporating various devices and functions of a navigation system.

Next, incorporating various devices and functions of the navigation system with the image generating apparatus is discussed, with regard to components.

As mentioned above, the image generating apparatus separately captures the coordinate transformation information such as the visual point, the visual range, the light source and so on and the drawing object information such as the road, the building and so on through the drawing application processor 11, and each information is adapted to drawing data, then stored and managed as such, from which the drawing device 13 generates images.

Firstly, the drawing object information is map information including roads and buildings available from a map database contained in the navigation system. The map information is stored in the CD-ROM 53 as well as DVD-ROM 54 which is readable using the CD-ROM drive 51 as well as DVD-ROM drive 52. Alternatively, the map information may be available from a predetermined web site via a communication device 58 to store into or use from the HDD 56. Alternatively, the map information of the drive route that is read using the CD-ROM drive 51 or the DVD-ROM drive 52 may be stored and then read at any desired time point later than this storing. This operation may be executed when a drive plan is made up.

The map information mentioned above, which is divided into multiple areas and designated by a coordinate system for each area, is transformed into only one coordinate system independent of the position of the visual point or the visual range by the display list generating routine 112 of the drawing application processor 11 in the image generating apparatus, in order to send an instruction to the display list preparation device 122 in the graphics library 12, where the map information is listed into the display list and stored (managed).

Next, relating to the coordinate transformation information that is involved in the image generating apparatus, such as the visual point, the visual range, the light source and so on, it is required to know a current position of the vehicle during the driving, which is determined from a self-contained positioning apparatus 30 or a GPS receiver 38 of the navigation system. From a comparison of a determined current position with the map information, a travel direction of the vehicle, and an appropriate visual point and visual range are determined. The visual point and visual range may be positioned at a predetermined position or range, or may be set manually.

On the other hand, once the travel direction of the vehicle and the present time are known, the bearing of the sun can be determined taking account of the seasonal factor, and thereby a position of the light source can also be determined by assuming the bearing of the sun as the light source. Similarly, in the case that a scene around a spot that is desired to be reached after a predetermined time period is required, the bearing of the sun can be determined by designating the spot and the arrival time, and therefore an image that takes an effect of the position of the light source at the arrival time can be viewed.

Alternatively, a change of the shade from sunrise to sunset in the scene can be viewed, by incorporating the coordinate transformation information into the drawing object information with a condition of time that passes from moment to moment. Furthermore, the 3D image can be changed successively by changing the other coordinate transformation information successively. Particularly, in the case that a 3D image corresponding to a scene is to be displayed when the vehicle is running continuously on a road, the 3D image can be displayed efficiently and continuously by changing the coordinate transformation information in accordance with the driving while the drawing object information is fixed, as discussed above.

As mentioned above, the scene object as the coordinate transformation information can be determined by using the function of the navigation system, while the drawing object information can be determined by using the map information. Therefore, a 3D image can be generated from both the coordinate transformation information and the drawing object information, which are independent of each other, and the 3D image is directed to the display unit 60 of the navigation system, where the graphics controller 61 stores it in the buffer memory 62 that employs the V-RAM or the like, and further the 3D image is read from the buffer memory 62 to be displayed on the display 64 via the display controller 63.

Hereinabove, the image generating apparatus of the present invention has been discussed in the case that it is applied to the navigation system, nevertheless, it is not limited to this embodiment, and also suitable for an image generation in a personal computer, a work station, a mobile, a cell phone and the like, an image generation in a TV game, an arcade game, a mobile game and the like, and an image generation in a drive simulation device or a training device for various vehicles such as a automobile, a motorcycle, a plane, a helicopter, a rocket, a ship and the like.

Furthermore, the present invention is not limited to the above-mentioned embodiments but may be changed as appropriate in a range without departing from the scope of the claims.

### Industrial Applicability

The present invention is applicable to an image generation in a navigation system, a personal computer, a cell phone and the like, an image generation in a TV game, a mobile game and the like, and an image generation in a drive simulation device or a training device for various vehicles such as a automobile, a plane, a ship and the like.

## Claims

1. An image generating apparatus having a drawing device (13) which can generate a three-dimensional image, and a drawing application processor (11) and a graphics library (12) that allow said drawing device (13) to generate the three-dimensional image, **characterized in that**
said drawing application processor (11) comprises
i) a drawing object information generating device (15) which is adapted to generate drawing object information to generate an image for each object included in a three-dimensional image to be generated in a plurality of single coordinate systems each of which corresponds to respective one of predetermined information units each of which is a unit for said drawing device (13) to generate the three-dimensional image, on the basis of three-dimensional coordinate information of an object included in a three-dimensional image to be generated, and
ii) a coordinate transformation information generatingdevice (14) which is adapted to generate coordinate transformation information to define at least a visual point and a visual range when the three-dimensional image is to be generated and for designating an identifier with respect to the generated coordinate transformation information,
said graphics library (12) comprises
i) a drawing object information storing device which is adapted to store the generated drawing object information; and
ii) a coordinate transformation information storing device which is adapted to store the generated coordinate transformation information in association with the designated identifier, and
said drawing device (13) is adapted to generate the three-dimensional image by incorporating the stored coordinate transformation information that is specified by the identifier for an image generation with the stored drawing object information, for said each predetermined information unit.

2. The image generating apparatus according to claim 1, **characterized in that**
said coordinate transformation information storing device is adapted to store a plurality of pieces of coordinate transformation information generated by said coordinate transformation information generating device, in association with the identifier,
said drawing object information storing device is adapted to store a plurality of pieces of drawing object information generated by said drawing object information generating device, and
said drawing device (13) is adapted to generate the three-dimensional image from a desired combination of the coordinated transformation information and the drawing object information, by specifying the coordinate transformation information by the identifier for the image generation.

3. The image generating apparatus according to claim 1, **characterized in that** said drawing application processor (11) comprises:
a list preparation function for preparing a list of the drawing object information;
a set up function for setting up the coordinate transformation information and for designating the identifier; and
an execution instruction function for instructing an execution of a drawing in said drawing device.

4. The image generating apparatus according to claim 1, **characterized in that** said graphics library (12) comprises:
a function for storing and managing the coordinate transformation information in accordance with the designated identifier;
a function for storing and managing the drawing object information so as to be directly and collectively executed for high speed drawing by said drawing device; and
a function for controlling the drawing device (13) so as to collectively execute the coordinate transformation information and the drawing object information.

5. The image generating apparatus according to claim 1, **characterized in that** said drawing application processor (11) comprises a function for being supplied with map information including the three-dimensional coordinate information from a map database incorporated within a navigation system.

6. The image generating apparatus according to any one of claims 1 to 5, **characterized in that** said drawing device (13) is adapted to generate an image in perspective as the three-dimensional image.

7. The image generating apparatus according to any one of claims 1 to 5, **characterized in that** the coordinate transformation information includes information to define a light source, in addition to the information to define the visual point and the visual range.

8. The image generating apparatus according to any one of claims 1 to 5, **characterized in that** the visual point is set on the basis of a visual point of a driver of a vehicle.

9. The image generating apparatus according to any one of claims 1 to 5, **characterized in that** the visual range is set on the basis of a visual range of a driver of a vehicle.

10. The image generating apparatus according to any one of claims 1 to 5, **characterized in that** said drawing device is adapted to generate a three-dimensional image by superimposing a plurality of partial frame images that are to be generated on the basis of the drawing object information generated and stored for each object.

11. The image generating apparatus according to claim 10, **characterized in that** said image generating apparatus further comprises a frame buffer which is adapted to temporarily store the plurality of partial frame images.

12. The image generating apparatus according to any one of claims 1 to 5, **characterized in that** said coordinate transformation information generating device of said drawing application processor (11) is adapted to generate the coordinate transformation information and re-generates the identifier, while the drawing object information is maintained for an object commonly included in two three-dimensional images in series which differ sequentially from each other with the course of time.

13. The image generating apparatus according to any one of claims 1 to 5, **characterized in that**
said drawing object information generating device (15) of said drawing application processor (11) is adapted to generate the drawing object information for a plurality of three-dimensional images in a multitask operation,
said coordinate transformation information generating device (14) of said drawing application processor is adapted to generate the coordinate transformation information for the plurality of three-dimensional images in a multitask operation,
said drawing object information storing device of said graphics library is adapted to store the drawing object information for a plurality of three-dimensional images in a multitask operation, and
said coordinate transformation information storing device of said graphics library is adapted to store the coordinate transformation information for the plurality of three-dimensional images in a multitask operation.

14. An electronic equipment **characterized in that** said electronic equipment comprises:
the image generating apparatus according to claim 1;
an information source from which the three-dimensional information is supplied to said drawing application processor; and
a display device which is adapted to visually output the three-dimensional image that is generated by said drawing device.

15. A computer program that makes a computer function as an image generating apparatus having a drawing device (13) which can generate a three-dimensional image, and a drawing application processor (11) and a graphics library (12) that allow said drawing device to generate the three-dimensional image, **characterized in that**
said drawing application processor (11) comprises
i) a drawing object information generating device (15) which is adapted to generate drawing object information to generate an image for each object included in a three-dimensional image to be generated in a plurality of single coordinate systems each of which corresponds to respective one of predetermined information units each of which is a unit for said drawing device (13) to generate the three-dimensional image, on the basis of three-dimensional coordinate information of an object included in a three-dimensional image to be generated, and
ii) a coordinate transformation information generating device (14) which is adapted to generate coordinate transformation information to define at least a visual point and a visual range when the three-dimensional image is to be generated and for designating an identifier with respect to the generated coordinate transformation information,
said graphics library (12) comprises
i) a drawing object information storing device which is adapted to store the generated drawing object information; and
ii) a coordinate transformation information storing device which is adapted to store the generated coordinate transformation information in association with the designated identifier, and
said drawing device (13) is adapted to generate the three-dimensional image by incorporating the stored coordinate transformation information that is specified by the identifier for an image generation with the stored drawing object information, for said each predetermined information unit.

16. An image generating method with an image generating apparatus having a drawing device (13) which can generate a three-dimensional image, and a drawing application processor (11) and a graphics library (12) that allow said drawing device to generate the three-dimensional image, **characterized in that** said image generating method comprising:
a drawing object information generating process in which said drawing application processor (11) generates drawing object information to generate an image for each object included in a three-dimensional image to be generated in a plurality of single coordinate systems each of which corresponds to respective one of predetermined information units each of which is a unit for said drawing device (13) to generate the three-dimensional image, on the basis of the three-dimensional coordinate information of an object included in a three-dimensional image to be generated,
a coordinate transformation information generating process in which said drawing application processor (11) generates coordinate transformation information to define at least a visual point and a visual range when the three-dimensional image is to be generated and of designating an identifier with respect to the generated coordinate transformation information,
a drawing object information storing process in which said graphics library stores the generated drawing object information,
a coordinate transformation information storing process in which said graphics library stores the generated coordinate transformation information in association with the designated identifier, and
a process in which said drawing device (13) generates the three-dimensional image by incorporating the stored coordinate transformation information that is specified by the identifier for an image generation with the stored drawing object information, for said each predetermined information unit.

17. The image generating method according to claim 16, **characterized in that** said image generating method further comprises:
a list preparation process in which said drawing application processor (11) prepares a list of the drawing object information, in said drawing application processor (11);
a set up process in which said drawing application processor (11) sets up the coordinate transformation information and of designating the identifier; and
an execution instruction process in which said drawing application processor (11) instructs an execution of a drawing in said drawing device.

18. The image generating method according to claim 16 or 17, **characterized in that** said image generating method further comprises:
a process in which said graphics library (12) stores and manages the coordinate transformation information in accordance with the designated identifier;
a process in which said graphics library (12) stores and manages the drawing object information so as to be directly and collectively executed for high speed drawing by said drawing device; and
a process in which said graphics library (12) controls the drawing device (13) so as to collectively execute the coordinate transformation information and the drawing object information.

## Patentansprüche

1. Bilderzeugungsvorrichtung mit einem Bauelement (13) für Zeichnen, das ein dreidimensionales Bild erzeugen kann, und einem Applikations-Prozessor (11) für Zeichnen und einer Grafikbibliothek (12), die dem besagten Bauelement (13) für Zeichnen erlaubt das dreidimensionale Bild zu erzeugen, **dadurch gekennzeichnet, dass**
der besagte Applikations-Prozessor (11) für Zeichnen umfasst i) ein Bauelement (15) zur Erzeugung von Zeichnungsobjektinformation, das angepasst ist Zeichnungsobjektinformation zu erzeugen, um ein Bild für jedes Objekt zu erzeugen, das in einem dreidimensionalen Bild inbegriffen ist, das in einer Vielheit einzelner Koordinatensysteme erzeugt werden soll, wovon jedes einer jeweiligen von vorbestimmten Informationseinheiten entspricht, von denen jede eine Einheit für das besagte Bauelement (13) für Zeichnen ist, um das dreidimensionale Bild auf der Basis von dreidimensionaler Koordinateninformation eines Objekts zu erzeugen, das in einem dreidimensionalen zu erzeugenden Bild inbegriffen ist, und ii) ein Bauelement (14) zur Erzeugung von Information für Koordinatentransformation, das angepasst ist, Information für Koordinatentransformation zu erzeugen, um zumindest einen Blickpunkt und einen Sichtbereich zu definieren, wenn das dreidimensionale Bild zu erzeugen ist und einen Bezeichner in Bezug auf die erzeugte Information für Koordinatentransformation zu definieren,
die besagte Grafikbibliothek (12) umfasst i) ein Speicherbauelement für Zeichnungsobjektinformation, das angepasst ist, die erzeugte Zeichnungsobjektinformation zu speichern; und ii) ein Speicherbauelement für Information zur Koordinatentransformation, das angepasst ist, die erzeugte Information für Koordinatentransformation in Verbindung mit dem designierten Bezeichner zu speichern , und
das besagte Bauelement (13) für Zeichnen angepasst ist, das dreidimensionale Bild durch Integrieren der gespeicherten Information für Koordinatentransformation zu erzeugen, die vom Bezeichner für eine Bilderzeugung mit der gespeicherten Zeichnungsobjektinformation, für die besagte jede vorbestimmte Informationseinheit spezifiziert ist.

2. Bilderzeugungsvorrichtung nach Anspruch 1, **dadurch gekennzeichnet, dass** das besagte Bauelement zum Speichern von Information für Koordinatentransformation angepasst ist, eine Vielheit von Teilen von Information für Koordinatentransformation zu speichern, die vom besagten Bauelement zur Erzeugung von Information für Koordinatentransformation, in Verbindung mit dem Bezeichner, erzeugt wurde,
das besagte Bauelement zum Speichern von Zeichnungsobjektinformation angepasst ist, eine Vielheit von Teilen von Zeichnungsobjektinformation zu speichern, die vom besagten Bauelement zur Erzeugung von Zeichnungsobjektinformation erzeugt wurde, und
das besagte Bauelement (13) für Zeichnen angepasst ist, das dreidimensionale Bild aus einer erwünschten Kombination der Information für koordinierte Transformationsinformation und der Zeichnungsobjektinformation, durch Spezifizieren der Information für Koordinatentransformation durch den Bezeichner für die Bilderzeugung, zu erzeugen.

3. Bilderzeugungsvorrichtung nach Anspruch 1, **dadurch gekennzeichnet, dass** der besagte Applikations-Prozessor (11) für Zeichnen umfasst:
eine Listen-Vorbereitungsfunktion zur Vorbereitung einer Liste der Zeichnungsobjektinformation;
eine Setup-Funktion zum Einstellen der Information für Koordinatentransformation und zur Designierung des Bezeichners; und
eine Ausführungsbefehlsfunktion zur Anweisung einer Ausführung einer Zeichnung im besagten Bauelement für Zeichnen.

4. Bilderzeugungsvorrichtung nach Anspruch 1, **dadurch gekennzeichnet, dass** die besagte Grafikbibliothek (12) umfasst:
eine Funktion zum Speichern und Managen der Information für Koordinatentransformation in Übereinstimmung mit dem designierten Bezeichner;
eine Funktion zum Speichern und Managen der Zeichnungsobjektinformation, um direkt und kollektiv für Hochgeschwindigkeitszeichnen durch das besagte Bauelement für Zeichnen ausgeführt zu werden; und
eine Funktion zum Steuern des Bauelements (13) für Zeichnen, um die Information für Koordinatentransformation und die Zeichnungsobjektinformation kollektiv auszuführen.

5. Bilderzeugungsvorrichtung nach Anspruch 1, **dadurch gekennzeichnet, dass** der besagte Applikations-Prozessor (11) für Zeichnen eine Funktion zum Beliefern mit Map-Information umfasst, die dreidimensionale Koordinateninformation von einer Map-Datenbank einschließt, die innerhalb eines Navigationssystems integriert ist.

6. Bilderzeugungsvorrichtung nach einem beliebigen der Ansprüche 1 bis 5, **dadurch gekennzeichnet, dass** das besagte Bauelement (13) für Zeichnen angepasst ist, ein Bild in Perspektive als das dreidimensionale Bild zu erzeugen.

7. Bilderzeugungsvorrichtung nach einem beliebigen der Ansprüche 1 bis 5, **dadurch gekennzeichnet, dass** die Information für Koordinatentransformation Information einschließt, eine Lichtquelle, zusätzlich zur Information zum Definieren des Blickpunkts und des Sichtbereichs, zu definieren.

8. Bilderzeugungsvorrichtung nach einem beliebigen der Ansprüche 1 bis 5, **dadurch gekennzeichnet, dass** der Blickpunkt auf der Basis eines Blickpunkts eines Fahrzeugfahrers eingestellt wird.

9. Bilderzeugungsvorrichtung nach einem beliebigen der Ansprüche 1 bis 5, **dadurch gekennzeichnet, dass** der Sichtbereich auf der Basis eines Sichtbereichs eines Fahrzeugfahrers eingestellt wird.

10. Bilderzeugungsvorrichtung nach einem beliebigen der Ansprüche 1 bis 5, **dadurch gekennzeichnet, dass** das besagte Bauelement für Zeichnen angepasst ist, ein dreidimensionales Bild durch Überlagerung einer Vielheit von teilweisen Rahmenbildern zu erzeugen, die auf der Basis der Zeichnungsobjektinformation zu erzeugen und für jedes Objekt zu speichern ist.

11. Bilderzeugungsvorrichtung nach Anspruch 10, **dadurch gekennzeichnet, dass** die besagte Bilderzeugungsvorrichtung weiter einen Rahmenpuffer umfasst, der angepasst ist, die Vielheit von teilweisen Rahmenbildern vorübergehend zu speichern.

12. Bilderzeugungsvorrichtung nach einem beliebigen der Ansprüche 1 bis 5, **dadurch gekennzeichnet, dass** das besagte Bauelement zur Erzeugung von Information für Koordinatentransformation des besagten Applikations-Prozessors (11) für Zeichnen angepasst ist, die Information für Koordinatentransformation zu regenerieren und den Bezeichner zu regenerieren, während die Zeichnungsobjektinformation für ein Objekt beibehalten wird, das allgemein in zwei dreidimensionalen Bildern in Reihe inbegriffen ist, die sich mit dem Zeitverlauf sequenziell voneinander unterscheiden.

13. Bilderzeugungsvorrichtung nach einem beliebigen der Ansprüche 1 bis 5, **dadurch gekennzeichnet, dass**
das besagte Bauelement (15) des besagten Applikations-Prozessors (11) für Zeichnen zum Erzeugen von Zeichnungsobjektinformation angepasst ist, die Zeichnungsobjektinformation für eine Vielheit von dreidimensionalen Bilder in einem Multitasking-Vorgang zu erzeugen,
das Bauelement (14) zum Erzeugen der besagten Information für Koordinatentransformation des besagten Applikations-Prozessors für Zeichnen angepasst ist, die Information für Koordinatentransformation für die Vielheit von dreidimensionalen Bildern in einem Multitasking-Vorgang zu erzeugen,
das besagte Bauelement zum Speichern von Zeichnungsobjektinformation der besagten Grafikbibliothek angepasst ist, die Zeichnungsobjektinformation für eine Vielheit von dreidimensionalen Bildern in einem Multitasking-Vorgang zu speichern, und
das besagte Bauelement der besagten Grafikbibliothek zum Speichern der Information für Koordinatentransformation angepasst ist, die Information für Koordinatentransformation für die Vielheit von dreidimensionalen Bildern in einem Multitasking-Vorgang zu speichern.

14. Elektronikausrüstung, **dadurch gekennzeichnet, dass** die besagte Elektronikausrüstung umfasst:
die Bilderzeugungsvorrichtung nach Anspruch 1;
eine Informationsquelle von der die dreidimensionale Information an den besagten Applikations-Prozessor für Zeichnen geliefert wird; und
eine Display-Vorrichtung, die angepasst ist, das vom besagten Bauelement für Zeichnen erzeugte dreidimensionale Bild visuell auszugeben.

15. Computerprogramm, das bewirkt, dass ein Computer als eine Bilderzeugungsvorrichtung fungiert, die ein Bauelement (13) für Zeichnen, das ein dreidimensionales Bild erzeugen kann und einen Applikations-Prozessor (11) für Zeichnen und eine Grafikbibliothek (12) aufweist, die dem besagten Bauelement für Zeichnen erlauben das dreidimensionale Bild zu erzeugen, **dadurch gekennzeichnet, dass**
der besagte Applikations-Prozessor (11) für Zeichnen umfasst i) ein Bauelement (15) zur Erzeugung von Zeichnungsobjektinformation, das angepasst ist, Zeichnungsobjektinformation zu erzeugen, um ein Bild für jedes Objekt zu erzeugen, das in einem dreidimensionalen Bild inbegriffen ist, das in einer Vielheit von einzelnen Koordinatensystemen zu erzeugen ist, wobei jedes einer jeweiligen von vorbestimmten Informationseinheiten entspricht, wovon jede eine Einheit für das besagte Bauelement (13) für Zeichnen ist, um das dreidimensionale Bild auf der Basis von dreidimensionaler Koordinateninformation eines Objekts zu erzeugen, das in einem dreidimensionalen zu erzeugenden Bild inbegriffen ist, und ii) ein Bauelement (14) zum Erzeugen von Information für Koordinatentransformation, das angepasst ist, Information für Koordinatentransformation zu erzeugen, um zumindest einen Blickpunkt und einen Sichtbereich zu definieren, wenn das drei-dimensionale Bild zu erzeugen ist und zum Designieren eines Bezeichners bezüglich der erzeugten Information für Koordinatentransformation,
die besagte Grafikbibliothek (12) umfasst i) ein Bauelement zum Speichern von Zeichnungsobjektinfomation, das angepasst ist, die erzeugte Zeichnungsobjektinformation zu speichern; und ii) ein Bauelement zum Speichern von Information für Koordinatentransformation, das angepasst ist, die erzeugte Information für Koordinatentransformation in Verbindung mit dem designierten Bezeichner zu speichern, und
das besagte Bauelement (13) für Zeichnen angepasst ist, das dreidimensionale Bild durch Integrieren der gespeicherten Information für Koordinatentransformation zu erzeugen, die vom Bezeichner für eine Bilderzeugung mit der gespeicherten Zeichnungsobjektinformation für die besagte jede vorbestimmte Informationseinheit spezifiziert ist.

16. Bilderzeugungsverfahren mit einer Bilderzeugungsvorrichtung, die ein Bauelement (13) für Zeichnen aufweist, das dreidimensionales Bild erzeugen kann und mit einem Applikations-Prozessor (11) für Zeichnen und einer Grafikbibliothek (12), die dem besagten Bauelement für Zeichnen erlauben, das dreidimensionale Bild zu erzeugen, **dadurch gekennzeichnet, dass** das besagte Bilderzeugungsverfahren umfasst:
einen Prozess zum Erzeugen von Zeichnungsobjektinformation, bei dem der besagte Applikations-Prozessor (11) für Zeichnen Zeichnungsobjektinformation erzeugt, um ein Bild für jedes Objekt zu erzeugen, das in einem dreidimensionalen Bild inbegriffen ist, das in einer Vielheit von einzelnen Koordinatensystemen zu erzeugen ist, wovon jedes einer jeweiligen von vorbestimmten Informationseinheiten entspricht, wovon jede eine Einheit für das besagte Bauelement (13) für Zeichnen ist, um das dreidimensionale Bild auf der Basis der dreidimensionalen Koordinateninformation eines Objekts zu erzeugen, das im zu erzeugenden dreidimensionalen Bild inbegriffen ist,
einen Prozess zum Erzeugen von Information für Koordinatentransformation, bei dem der besagte Applikations-Prozessor (11) für Zeichnen Information für Koordinatentransformation erzeugt, um zumindest einen Blickpunkt und einen Sichtbereich, wenn das dreidimensionale Bild erzeugt werden soll und einen Bezeichner bezüglich der erzeugten Information für Koordinatentransformation zu definieren,
Prozess zum Speichern von Zeichnungsobjektinformation, bei dem die besagte Grafikbibliothek die erzeugte Zeichnungsobjektinformation speichert,
Prozess zum Speicher von Information für Koordinatentransformation, bei dem die besagte Grafikbibliothek die erzeugte Information für Koordinatentransformation in Verbindung mit dem designierten Bezeichner speichert, und
einen Prozess, bei dem das besagte Bauelement (13) für Zeichnen das dreidimensionale Bild durch Integrieren der gespeicherten Information für Koordinatentransformation erzeugt, die vom Bezeichner für eine Bilderzeugung mit der gespeicherten Zeichnungsobjektinformation für die besagte jede vorbestimmte Informationseinheit spezifiziert ist.

17. Bilderzeugungsverfahren nach Anspruch 16, **dadurch gekennzeichnet, dass** das besagte Bilderzeugungsverfahren weiter umfasst:
einen Listen-Vorbereitungsprozess, bei dem der besagte Applikations-Prozessor (11) für Zeichnen eine Liste der Zeichnungsobjektinformation im besagten Applikations-Prozessor (11) für Zeichnen vorbereitet;
einen Setup-Prozess, bei dem der besagte Applikations-Prozessor (11) für Zeichnen die Information für Koordinatentransformation einstellt und den Bezeichner designiert; und
einen Ausführungsbefehlsprozess, bei dem der besagte Applikations-Prozessor (11) für Zeichnen eine Ausführung einer Zeichnung im besagten Bauelement für Zeichnen befiehlt.

18. Bilderzeugungsverfahren nach Anspruch 16 oder 17, **dadurch gekennzeichnet, dass** das besagte Bilderzeugungsverfahren weiter umfasst:
einen Prozess, bei dem die besagte Grafikbibliothek (12) die Information für Koordinatentransformation in Übereinstimmung mit dem designierten Bezeichner speichert und managt;
einen Prozess, bei dem die besagte Grafikbibliothek (12) die Zeichnungsobjektinformation speichert und managt, um vom besagten Bauelement für Zeichnen für Schnellzeichnen direkt und kollektiv ausgeführt zu werden; und
einen Prozess, bei dem die besagte Grafikbibliothek (12) das Bauelement (13) für Zeichnen steuert, um die Information für Koordinatentransformation und die Zeichnungsobjektinformation kollektiv auszuführen.

## Revendications

1. Appareil de génération d'image ayant un dispositif de dessin (13) pouvant générer une image tridimensionnelle, et un processeur d'application de dessin (11) et une bibliothèque de graphiques (12) qui permet audit dispositif de dessin (13) de générer l'image tridimensionnelle, **caractérisé en ce que**
ledit processeur d'application de dessin (11) comprend
i) un dispositif de génération d'informations d'objet de dessin (15) adapté pour générer des informations d'objet de dessin afin de générer une image de chaque objet inclus dans une image tridimensionnelle à générer dans une pluralité de systèmes de coordonnées uniques qui correspondent chacun à une unité respective d'unités d'informations prédéterminées qui sont chacune une unité dudit dispositif de dessin (13) pour générer l'image tridimensionnelle, en fonction d'informations de coordonnées tridimensionnelles d'un objet inclus dans une image tridimensionnelle à générer, et
ii) un dispositif de génération d'informations de transformation de coordonnées (14) adapté pour générer des informations de transformation de coordonnées pour définir au moins un point visuel et une portée visuelle quand l'image tridimensionnelle doit être générée et pour désigner un identifiant relativement aux informations de transformation de coordonnées générées,
ladite bibliothèque de graphiques (12) comprend
i) un dispositif de mémorisation d'informations d'objet de dessin adapté pour mémoriser les informations d'objet de dessin générées ; et
ii) un dispositif de mémorisation d'informations de transformation de coordonnées adapté pour mémoriser les informations de transformation de coordonnées générées en association avec l'identifiant désigné ; et
ledit dispositif de dessin (13) est adapté pour générer l'image tridimensionnelle en incorporant les informations de transformation de coordonnées mémorisées qui sont spécifiées par l'identifiant pour une génération d'image avec les informations d'objet de dessin mémorisées, pour chaque dite unité d'information prédéterminée.

2. Appareil de génération d'image selon la revendication 1, **caractérisé en ce que**
ledit dispositif de mémorisation d'informations de transformation de coordonnées est adapté pour mémoriser une pluralité d'éléments d'informations de transformation de coordonnées générées par ledit dispositif de génération d'informations de transformation de coordonnées, en association avec l'identifiant,
ledit dispositif de mémorisation d'objet de dessin est adapté pour mémoriser une pluralité d'éléments d'informations d'objet de dessin générées par ledit dispositif de génération d'informations d'objet de dessin, et
ledit dispositif de dessin (13) est adapté pour générer l'image tridimensionnelle à partir d'une combinaison souhaitée des informations de transformation de coordonnées et des informations d'objet de dessin, en spécifiant les informations de transformation de coordonnées par l'identifiant pour la génération d'image.

3. Appareil de génération d'image selon la revendication 1, **caractérisé en ce que** ledit processeur d'application de dessin (11) comprend :
une fonction de préparation de liste pour préparer une liste des informations d'objet de dessin ;
une fonction d'établissement pour établir les informations de transformation de coordonnées et pour désigner l'identifiant ; et
une fonction d'instructions d'exécution pour ordonner une exécution d'un dessin dans ledit dispositif de dessin.

4. Appareil de génération d'image selon la revendication 1, **caractérisé en ce que** ladite bibliothèque de graphiques (12) comprend :
une fonction de mémorisation et de gestion des informations de transformation de coordonnées en fonction de l'identifiant désigné ;
une fonction de mémorisation et de gestion des informations d'objet de dessin de manière à être exécutée directement et collectivement pour un dessin à grande vitesse par ledit dispositif de dessin ; et
une fonction de commande du dispositif de dessin (13) de manière à exécuter collectivement les informations de transformation de coordonnées et les informations d'objet de dessin.

5. Appareil de génération d'image selon la revendication 1, **caractérisé en ce que** ledit processeur d'application de dessin (11) comprend une fonction pour recevoir des informations de carte comportant les informations de coordonnées tridimensionnelles à partir d'une base de données de carte incorporée dans un système de navigation.

6. Appareil de génération d'image selon l'une quelconque des revendications 1 à 5, **caractérisé en ce que** ledit dispositif de dessin (13) est adapté pour générer une image en perspective sous forme d'image tridimensionnelle.

7. Appareil de génération d'image selon l'une quelconque des revendications 1 à 5, **caractérisé en ce que** les informations de transformation de coordonnées comportent des informations pour définir une source de lumière, en plus d'informations pour définir le point visuel et la portée visuelle.

8. Appareil de génération d'images selon l'une quelconque des revendications 1 à 5, **caractérisé en ce que** le point visuel est établi en fonction d'un point visuel d'un conducteur d'un véhicule.

9. Appareil de génération d'images selon l'une quelconque des revendications 1 à 5, **caractérisé en ce que** la portée visuelle est établie en fonction d'une portée visuelle d'un conducteur d'un véhicule.

10. Appareil de génération d'images selon l'une quelconque des revendications 1 à 5, **caractérisé en ce que** ledit dispositif de dessin est adapté pour générer une image tridimensionnelle en superposant une pluralité d'images partielles qui doivent être générées en fonction des informations d'objet de dessin générées et mémorisées pour chaque objet.

11. Appareil de génération d'images selon la revendication 10, **caractérisé en ce que** ledit appareil de génération d'image comprend en outre une mémoire d'images adaptée pour mémoriser temporairement la pluralité d'images partielles.

12. Appareil de génération d'images selon l'une quelconque des revendications 1 à 5, **caractérisé en ce que** ledit dispositif de génération d'informations de transformation de coordonnées dudit processeur d'application de dessin (11) est adapté pour générer à nouveau les informations de transformation de coordonnées et générer à nouveau l'identifiant, pendant que les informations d'objet de dessin sont tenues à jour pour un objet communément inclus dans deux images tridimensionnelles en série qui diffèrent séquentiellement l'une de l'autre dans le temps.

13. Appareil de génération d'image selon l'une quelconque des revendications 1 à 5, **caractérisé en ce que**
ledit dispositif de génération d'informations d'objet de dessin (15) dudit processeur d'application de dessin (11) est adapté pour générer les informations d'objet de dessin d'une pluralité d'images tridimensionnelles dans une opération multitâche,
ledit dispositif de génération d'informations de transformation de coordonnées (14) dudit processeur d'application de dessin est adapté pour générer les informations de transformation de coordonnées de la pluralité d'images tridimensionnelles dans une opération multitâche,
ledit dispositif de mémorisation d'informations d'objet de dessin de ladite bibliothèque de graphiques est adapté pour mémoriser les informations d'objet de dessin d'une pluralité d'images tridimensionnelles dans une opération multitâche, et
ledit dispositif de mémorisation d'informations de transformation de coordonnées de ladite bibliothèque de graphiques est adapté pour mémoriser les informations de transformation de coordonnées de la pluralité d'images tridimensionnelles dans une opération multitâche.

14. Equipement électronique **caractérisé en ce qu'**il comprend :
l'appareil de génération d'images selon la revendication 1 ;
une source d'informations qui fournit les informations tridimensionnelles audit processeur d'application de dessin ; et
un dispositif d'affichage adapté pour produire visuellement en sortie l'image tridimensionnelle générée par ledit dispositif de dessin.

15. Programme informatique qui effectue une fonction informatique comme un appareil de génération d'image ayant un dispositif de dessin (13) pouvant générer une image tridimensionnelle, et un processeur d'application de dessin (11) et une bibliothèque de graphiques (12) qui permettent audit dispositif de dessin de générer l'image tridimensionnelle, **caractérisé en ce que**
ledit processeur d'application de dessin (11) comprend
i) un dispositif de génération d'informations d'objet de dessin (15) adapté pour générer des informations d'objet de dessin afin de générer une image de chaque objet inclus dans une image tridimensionnelle à générer dans une pluralité de systèmes de coordonnées uniques qui correspondent chacun à une unité respective d'unités d'informations prédéterminées qui sont chacune une unité dudit dispositif de dessin (13) pour générer l'image tridimensionnelle, en fonction d'informations de coordonnées tridimensionnelles d'un objet inclus dans une image tridimensionnelle à générer, et
ii) un dispositif de génération d'informations de transformation de coordonnées (14) adapté pour générer des informations de transformation de coordonnées pour définir au moins un point visuel et une portée visuelle quand l'image tridimensionnelle doit être générée et pour désigner un identifiant relativement aux informations de transformation de coordonnées générées,
ladite bibliothèque de graphiques (12) comprend
i) un dispositif de mémorisation d'informations d'objet de dessin adapté pour mémoriser les informations d'objet de dessin générées ; et
ii) un dispositif de mémorisation d'informations de transformation de coordonnées adapté pour mémoriser les informations de transformation de coordonnées générées en association avec l'identifiant désigné ; et
ledit dispositif de dessin (13) est adapté pour générer l'image tridimensionnelle en incorporant les informations de transformation de coordonnées mémorisées qui sont spécifiées par l'identifiant pour une génération d'image avec les informations d'objet de dessin mémorisées, pour chaque dite unité d'information prédéterminée.

16. Procédé de génération d'images avec un appareil de génération d'images ayant un dispositif de dessin (13) qui peut générer une image tridimensionnelle, et un processeur d'application de dessin (11) et une bibliothèque de graphiques (12) qui permettent audit dispositif de dessin de générer l'image tridimensionnelle, **caractérisé en ce que** ledit procédé de génération d'image comprend
un processus de génération d'informations d'objet de dessin dans lequel ledit processeur d'application de dessin (11) génère des informations d'objet de dessin afin de générer une image de chaque objet inclus dans une image tridimensionnelle à générer dans une pluralité de systèmes de coordonnées uniques qui correspondent chacun à une unité respective d'unités d'informations prédéterminées qui sont chacune une unité dudit dispositif de dessin (13) pour générer l'image tridimensionnelle, en fonction des informations de coordonnées tridimensionnelles d'un objet inclus dans une image tridimensionnelle à générer,
un processus de génération d'informations de transformation de coordonnées dans lequel ledit processeur d'application de dessin (11) génère des informations de transformation de coordonnées pour définir au moins un point visuel et une portée visuelle quand l'image tridimensionnelle doit être générée et pour désigner un identifiant relativement aux informations de transformation de coordonnées générées,
un processus de mémorisation d'informations d'objet de dessin dans lequel ladite bibliothèque de graphiques mémorise les informations d'objet de dessin générées,
un processus de mémorisation d'informations de transformation de coordonnées dans lequel ladite bibliothèque de graphiques mémorise les informations de transformation de coordonnées générées en association avec l'identifiant désigné ; et
un processus dans lequel ledit dispositif de dessin (13) génère l'image tridimensionnelle en incorporant les informations de transformation de coordonnées mémorisées qui sont spécifiées par l'identifiant pour une génération d'image avec les informations d'objet de dessin mémorisées, pour chaque dite unité d'information prédéterminée.

17. Procédé de génération d'image selon la revendication 16, **caractérisé en ce qu'**il comprend en outre :
un processus de préparation de liste dans lequel ledit processeur d'application de dessin (11) prépare une liste des informations d'objet de dessin, dans ledit processeur d'application de dessin (11) :
un processus d'établissement dans lequel ledit processus d'application de dessin (11) établit les informations de transformation de coordonnées et désigne l'identifiant ; et
un processus d'instructions d'exécution dans lequel ledit processus d'application de dessin (11) ordonne une exécution d'un dessin dans ledit dispositif de dessin.

18. Procédé de génération d'images selon la revendication 16 ou 17, **caractérisé en ce que** ledit procédé de génération d'image comprend en outre :
un processus dans lequel ladite bibliothèque de graphiques (12) mémorise et gère les informations de transformation de coordonnées en fonction de l'identifiant désigné ;
un processus dans lequel ladite bibliothèque de graphiques (12) mémorise et gère les informations d'objet de dessin de manière à ce qu'elles soient exécutées directement et collectivement pour un dessin à grande vitesse par ledit dispositif de dessin ; et
un processus dans lequel ladite bibliothèque de graphiques (12) commande le dispositif de dessin (13) de manière à exécuter collectivement les informations de transformation de coordonnées et les informations d'objet de dessin.
